# EUROPÄISCHE PATENTSCHRIFT

(11) **EP 0 610 647 B1**
(45) Veröffentlichungstag und Bekanntmachung des Hinweises auf die Patenterteilung: **10.12.1997**
(21) Anmeldenummer: 94100036.6
(22) Anmeldetag: 04.01.1994
(51) Int. Cl.: B23D 61/02, B23D 61/12

(54) **Sägeblatt mit einem Grundkörper und ungeschränkten Zähnen**
Saw blade with body and unstaggered teeth arrangement
Lame de scie avec base et denture alignée

(30) Priorität: 13.01.1993 DE 4300622
(43) Veröffentlichungstag der Anmeldung: 17.08.1994
(73) Patentinhaber: WIKUS-Sägenfabrik Wilhelm H. Kullmann, D-34286 Spangenberg (DE)
(72) Erfinder: Kullmann, Jörg H., Dr., D-34286 Spangenberg (DE)
(74) Vertreter: Rehberg, Elmar, Dipl.-Ing.

(56) Entgegenhaltungen:
- DE-A- 2 516 137
- DE-A- 3 611 063
- DE-A- 3 741 709
- DE-U- 9 206 000
- US-A- 4 604 933

## Beschreibung

Die Erfindung bezieht sich auf ein Sägeblatt mit mit den im Oberbegriff des Anspruchs 1 angegebenen Merkmalen. Die Erfindung kann sowohl bei einem Bandsägeblatt, also einem Sägeblatt mit linearer Anordnung der Zähne hintereinander, oder auch bei einem Bügelsägeblatt, oder auch bei einem Kreissägeblatt angewendet werden.

Ein Sägeblatt mit den im Oberbegriff des Anspruchs 1 angegebenen Merkmalen ist aus der DE-U-92 06 000 bekannt. Es wird zwischen der Anzahl der Zähne pro Gruppe und der Anzahl der Zähne pro Zyklus unterschieden. Eine Gruppe von Zähnen liegt dann vor, wenn die Zähne hinsichtlich eines gemeinsamen Kriteriums, z. B. einer Höhen- und Breitenabstufung, als zueinandergehörig betrachtet werden können. Ein Zyklus von Zähnen liegt dann vor, wenn die Zähne hinsichtlich aller Kriterien, z. B. Merkmale, als zueinandergehörig betrachtet werden können und sich die Folge der Zähne genau wiederholt. Die Anzahl der Zähne pro Gruppe kann gleich oder unterschiedlich zu der Anzahl der Zähne pro Zyklus sein. Die Zähne des Sägeblattes können mit konstanter oder variabler Teilung angeordnet sein. Die wirksamen Schneiden bzw. Schneidenabschnitte sämtlicher Zähne sind jeweils von einer abknickenden Schnittkante gebildet, deren innerer Abschnitt etwa senkrecht zur Längsmittelebene des Bandes verläuft und an den sich nach außen eine zum Grundkörper hin geneigte Phase anschließt, wobei der breiteste Zahn in der Gruppe zwischen Phase und Flanke einen Winkel größer 90° aufweist. Bei konstanter Teilung erbringt die Höhen- und Breitenabstufung der Zähne in der Gruppe trotz der Ähnlichkeit in der Formgebung der Zähne bereits eine verminderte Empfindlichkeit gegen Schwingungen und einen hervorragenden Geradeauslauf des stabilisierten Bandes ohne die Gefahr des seitlichen Verlaufens.

Aus der DE-OS 36 11 063 ist ein Sägeblatt mit Zähnen bekannt, die in sich wiederholenden Zyklen vorgesehen sind. Jeder Zyklus bildet dabei zugleich eine Zahngruppe, so daß die Anzahl der Zähne pro Zyklus mit der Anzahl der Zähne pro Gruppe übereinstimmt. Die Zähne in der Gruppe bzw. im Zyklus werden hinsichtlich eines Führungszahnes, also dem ersten Zahn oder mehreren ersten Zähnen, in einem Zyklus oder einer Gruppe und hinsichtlich Folgezähnen unterschieden. Der oder die Führungszähne sind häufig als ungeschränkte Zähne ausgebildet, während die Folgezähne in aller Regel als geschränkte Zähne ausgebildet sind. Sämtliche Zähne besitzen in der Regel gleiche Breite. Der Führungszahn besitzt die größte Höhe, und die Zahnhöhe nimmt in der Gruppe ab. Manchmal ist der Führungszahn angephast, oder seine Schneide ist durch eine Spanbrechernut unterbrochen. Die als geschränkte Zähne ausgebildeten Folgezähne sind in der Regel abwechselnd nach links und rechts geschränkt vorgesehen, um auf diese Art und Weise die Breite des Schnittkanals größer zu gestalten als die Breite des Grundkörpers des Sägeblatts. Wenn zwei Führungszähne eingesetzt werden, können diese auch mit einem Höhenversatz ähnlich wie bei bekannten Vor- und Nachschneidern eines Kreissägeblattes gestaltet sein, wobei die wirksame Schnittkante dabei auf die zwei Führungszähne aufgeteilt wird. Durch die den Schnittkanal verbreiternden Folgezähne, die geschränkt ausgebildet sind, wird der Zyklus der Zähne vervollständigt. Die Höhenabnahme der Zähne erfolgt in der Regel stufenweise nacheinander, wobei aber auch Ausführungsbeispiele mit unterschiedlichen Zähnen hinsichtlich ihrer Höhe aufgezeigt werden, die jedoch unregelmäßig im Zyklus angeordnet sind. Bei einem der dargestellten Ausführungsbeispiele sind sieben Zähne vorgesehen, wobei der Führungszahn ungeschränkt ausgebildet ist und eine über die Breite des Grundkörpers durchgehende gerade Schnittkante besitzt. Diesem Führungszahn sind drei Paare von jeweils zwei Folgezähnen nachgeordnet, die sämtlich als geschränkte Zähne ausgebildet sind, wobei die Schränkung abwechselnd nach links und rechts erfolgt. Die beiden letzten Paare von Folgezähnen können identische Schrankbreite besitzen, und zwar in Verbindung mit gleicher oder ungleicher Höhe der Zähne, so daß diese vier letzten Folgezähne die Breite des Schnittkanals festlegen und jeweils abwechselnd die beiden Stirnflächen des Schnittkanals bearbeiten. Damit bearbeitet beispielsweise der 5. und der 7. Zahn der aus sieben Zähnen bestehenden Zahngruppe die eine Oberfläche des Schnittkanals. Der 7. Zahn führt bezüglich des 5. Zahns einen Nachbearbeitungsschritt aus, der dazu dient, den Verlauf des 5. Zahnes auszugleichen.

Bei einer weiteren Ausführungsform sind in der Gruppe und damit im Zyklus fünf Zähne vorgesehen, wobei der Führungszahn wiederum ungeschränkt ausgebildet ist, während die vier Folgezähne als geschränkte Zähne gestaltet sind. Dabei ist jedoch die Schränkung des 1. und 4. Folgezahnes größer als die Schränkung des 2. und 3. Folgezahnes. Trotzdem wird jede Stirnwand des Schnittkanals nur von einem Zahn in der Gruppe bearbeitet. Dies ist auch dann der Fall, wenn statt eines ungeschränkten Führungszahnes zwei geschränkte Führungszähne eingesetzt werden.
In der DE-OS 36 11 063 wird auch ein Ausführungsbeispiel beschrieben, bei dem keine geschränkten Zähne, sondern nur ungeschränkte Zähne in der Zahngruppe bzw. im sich wiederholenden Zyklus vorgesehen sind. Dabei sind einem Führungszahn zwei Folgezähne in der Gruppe zugeordnet, wobei sich eine von Zahn zu Zahn abnehmende Höhe und eine von Zahn zu Zahn zunehmende Breite in der Gruppe ergibt. Der letzte breiteste Zahn in der Zahngruppe schließt in Einzelanordnung die Zahngruppe ab. Sämtliche Zähne sind symmetrisch zu einer Längsmittelebene durch den Grundkörper ausgebildet. Von einem solchen Sägeblatt geht die vorliegende Erfindung aus. Der erste Zahn in der Zahngruppe besitzt eine Schneide, die gradlinig durchgehend ausgebildet ist, wobei sich diese Schneide senkrecht zur Längsmittelebene des Sägeblattes erstreckt. Dieser erste Zahn stimmt mit seiner Breite mit der Breite des Grundkörpers überein. Die beiden Folgezähne besitzen ebenfalls gradlinig senkrecht zu der Längsmittelebene durchgehende Schneiden, von denen bei sich jeweils vergrößernder Breite jedoch jeweils nur äußere Teile wirksam sind. Die Folgezähne besitzen unterschiedliche Flankenwinkel, und auch der eingeschlossene Winkel jeweils zwischen Flanke und Schneide ist an den einzelnen Folgezähnen unterschiedlich, jedoch immer als spitzer Winkel ausgebildet. Die wirksame Schnittkante nimmt in ihrer Länge von Zahn zu Zahn in der Gruppe ab, so daß die wesentliche Schnittarbeit von dem Führungszahn zu leisten ist und die beiden Folgezähne im wesentlichen nur eine Verbreiterung des Schnittkanals bewirken, damit ein Freischnitt erreicht wird. Dieses Ausführungsbeispiel eines Sägeblatts soll in Funktion und Wirkung mit den Ausführungsbeispielen übereinstimmen, bei denen auch geschränkte Zähne zum Einsatz kommen. Während sich geschränkte Zähne noch mit vertretbarem Aufwand herstellen lassen, ist ein Sägeblatt, welches nur ungeschränkte Zähne unterschiedlicher Breite aufweist, äußerst aufwendig in der Herstellung, wobei es offenbleibt, wie die im Vergleich zur Breite des Grundkörpers größere Breite der Folgezähne überhaupt erreichbar ist. Darüberhinaus besitzt diese Ausführungsform mit den ungeschränkten Zähnen auch zahlreiche andere Nachteile. Der wirksame Teil der Schnittkante an den Folgezähnen schließt mit der Flanke jeweils einen spitzen Winkel ein, also einen Winkel, der kleiner als 90° ist, so daß diese seitlichen Zahnspitzen beim Erbringen der Schnittarbeit einem Verschleiß unterliegen, durch den sich die Breite des Schnittkanals rapide verringert. Dieser Nachteil tritt an den geschränkten Zähnen in nicht so großem Maße zutage, da hier der Winkel zwischen wirksamer Schnittkante und Flanke etwa 90° beträgt. Geschränkte Folgezähne sind jedoch immer ungünstig für den Geradeauslauf eines Sägeblatts, weil an ihnen Seitenkräfte entstehen, also Kräfte, die einseitig wirkend zu einer Auslenkung des betreffenden geschränkten Zahnes führen. Dies wirkt sich nicht nur hinsichtlich einer schlechteren Oberflächengüte an der geschnittenen Fläche im Schnittkanal aus, sondern bildet zugleich eine Schwingungsanregung für das Sägeblatt. Der ungeschränkte Führungszahn besitzt keinen seitlichen Freiwinkel, so daß er im Bereich seiner Flanken im Führungskanal reibt. Der Führungszahn muß die Hauptschnittarbeit erbringen und dabei den größten Querschnitt ausräumen. Dies gilt auch für mehrere Führungszähne innerhalb einer Zahngruppe; in allen Fällen sind die geschränkten Zähne weniger belastet. Sämtliche Ausführungsformen des bekannten Sägeblattes zielen darauf ab, daß sich sowohl die Führungszähne wie auch die Folgezähne beim Einschneiden in das Werkstück beteiligen. Infolgedessen werden die Späne auf eine kleine Größe reduziert, ihr leichter Austrag wird verbessert und die Schneidgeschwindigkeit erhöht. Durch die Anordnung von Pufferzähnen soll die Belastung der Führungszähne reduziert werden. Hierdurch wird die auf jeden Zahn ausgeübte Belastung gleichförmiger verteilt.

Aus der DE-OS 25 16 137 ist ein Kreissägeblatt bekannt, bei dem ein Zyklus bzw. eine Zahngruppe jeweils aus einem Vorund einem Nachschneider besteht. Vor- und Nachschneider besitzen gleiche Zahnhöhe und stimmen auch hinsichtlich der Zahnbreite mit der Breite des Grundkörpers überein. Vor- und Nachschneider besitzen in unterschiedlichen Winkeln angeordnete Phasen, so daß in bekannter Weise unterschiedliche Späne von dem Vor- und dem Nachschneider ausgeräumt werden. Da auch der Grundkörper im Schnittkanal reibt, ist die erzeugbare Oberflächengüte der Stirnwände im Schnittkanal vergleichsweise schlecht.

Der Erfindung liegt die Aufgabe zugrunde, ein Sägeblatt der eingangs beschriebenen Art bereitzustellen, welches in Verbindung mit einem stabilisierten Geradlauf im Schnittkanal eine verbesserte Oberflächengüte erzeugt. Die Rauhigkeit der erzeugten Oberfläche im Schnittkanal soll geringer sein als bisher.

Erfindungsgemäß wird dies bei dem Sägeblatt der eingangs beschriebenen Art dadurch erreicht, daß im Zyklus mindestens zwei Gruppen von Zähnen vorzugsweise regelmäßig ineinandergeschachtelt angeordnet sind, und daß die Zähne der zweiten mindestens aus zwei Zähnen bestehenden Gruppe identisch ausgebildet sind und die Zähne mit der größten Breite und geringsten Höhe darstellen.

Die Erfindung geht von dem Gedanken aus, im Zyklus der Zähne mindestens zwei unterscheidbare Gruppen von Zähnen vorzusehen, diese Gruppen jedoch nicht, wie üblich, hintereinander anzuordnen, sondern ineinanderzuschachteln. Die gegenseitige "Überdeckung" der Gruppen ist dann besonders sinnvoll, wenn sie regelmäßig ist. Bei einer solchen regelmäßigen Ineinanderschachtelung kann beispielsweise eine erste Gruppe aus z.B. drei Zähnen 1, 2, 3 vorgesehen sein, die eine von Zahn zu Zahn abnehmende Höhe und dabei zunehmende Breite aufweisen. Diese erste Gruppe der drei Zähne dient im wesentlichen der Vertiefung des Schnittkanals. Als zweite Gruppe von Zähnen mögen drei Zähne 4 vorgesehen sein, wobei der Zahn 4 eine geringere Höhe als der Zahn 3 der ersten Gruppe und eine größere Breite als dieser aufweist. Die zweite Gruppe von Zähnen dient der Bearbeitung der Oberfläche des Schnittkanals. Die beiden Gruppen sind dann abwechselnd regelmäßig ineinandergeschachtelt, so daß sich die Zahnfolge 1, 4, 2, 4, 3, 4 im Zyklus ergibt, wobei hier der Einfachheit einmal zugrundegelegt werden soll, daß eine konstante Teilung Anwendung findet, so daß sich sechs Zähne im Zyklus aus den beiden ineinandergeschachtelten Gruppen ergeben. Diese Ineinanderschachtelung oder gegenseitige Überdeckung der Gruppen im Zyklus erbringt in Verbindung mit dem notwendigerweise vorhandenen Vorschub den besonderen Vorteil, daß die Zähne der ersten Gruppe vergleichsweise dickere Späne und die Zähne der zweiten Gruppe vergleichsweise dünnere Späne aus dem Schnittkanal ausräumen. Beim Ausräumen dickerer Späne wirkt sich ein Verschleiß an der wirksamen Schnittkante nicht so nachteilig aus wie bei extrem dünnen Spänen. Die vermehrte Anordnung der Zähne der zweiten Gruppe, die die größte Breite aufweisen, erbringt die verbesserte Oberfläche im Schnittkanal. Die Erfindung hebt sich damit deutlich von dem Fall ab, bei dem innerhalb eines Zyklusses aus einer Gruppe von Zähnen mit unterschiedlicher Breite der breiteste Zahn lediglich in Doppelanordnung hintereinander vorgesehen ist. Um in dem oben beschriebenen Beispiel zu bleiben, wäre dies eine Zahnfolge 1, 2, 3, 3 im Zyklus. Freilich kann auch bei der erfindungsgemäßen Ineinanderschachtelung eine Doppelanordnung der Zähne der zweiten Gruppe vorgesehen sein, also gleichsam eine erste Gruppe von Zähnen mit zwei zweiten Gruppen von Zähnen ineinandergeschachtelt sein, so daß sich für das gegebene Beispiel die Zahnfolge 1, 4, 4, 2, 4, 4, 3, 4, 4 im Zyklus ergibt. Aber auch eine unregelmäßige Ineinanderschachtelung von fünf Zähnen 1, 2, 3, 4, 5 einer ersten Gruppe mit zwei Zähnen 6 einer zweiten Gruppe mit der Folge 1, 2, 3, 6, 4, 5, 6 im Zyklus macht von der erfindungsgemäßen Anordnung Gebrauch. Die Anzahl der Zähne in der ersten Gruppen sollte mindestens 2 betragen. Die Anzahl der Zähne in der zweiten Gruppe sollte mindestens 2 betragen. In der Regel stimmt die Anzahl der Zähne der ersten Gruppe mit der Anzahl der Zähne der zweiten Gruppe überein. Dabei ist es dann möglich, die Belastung der Zähne der ersten Gruppe untereinander gleich zu gestalten und ebenso die Belastung der Zähne der zweiten Gruppe untereinander, wobei jedoch die Belastung der Zähne der zweiten Gruppe unterschiedlich zu der Belastung der Zähne der ersten Gruppe ist. Die Erfindung darf nicht mit der Anwendung der bei Kreissägeblättern bekannten Vor- und Nachschneidertechnik verwechselt werden. Dort gibt es ohnehin nur zwei Arten von Zähnen, nämlich die Vorschneider und die Nachschneider. Insoweit kann dort auch nur von einer Gruppe aus Vor- und Nachschneider gesprochen werden. Es fehlt die zweite Gruppe von Zähnen im Zyklus. Bei der erfindungsgemäßen Ineinanderschachtelung geht es um ungeschränkte Zähne in beiden Gruppen. Die Einstreuung von geschränkten Zähnen im Zyklus hebt die erfindungsgemäße Wirkung zwar nicht auf, führt jedoch zu keiner Verbesserung der Eigenschaften.

Die einzelnen Zähne der ersten Gruppe sind nicht auf die Verwirklichung eines Führungszahnes und Folgezähnen hin gerichtet, sondern die einzelnen Zähne in der ersten Gruppe sind hinsichtlich der zu erbringenden Schnittarbeit als gleichwertig anzusehen, dergestalt, daß sämtliche Zähne der ersten Gruppe auch etwa in gleicher Weise belastet werden. Die Aufteilung der wirksamen Schnittkantenabschnitte auf die einzelnen Schneiden der Zähne der ersten Gruppe und ihre Anordnung auf relativ großem Abstand zueinander, nämlich um beispielsweise den Abstand zweier Teilungen, dient dem Ziel, möglichst Späne mit vergleichsweise vergrößerter Dicke auszuräumen.

Die Erfindung läßt sich auch in Verbindung mit der bekannten Vor- und Nachschneidertechnik anwenden. Ein besonders einfaches Beispiel ist eine Zahnfolge: Vorschneider, breitester Zahn der zweiten Gruppe, Nachschneider, breitester Zahn der zweiten Gruppe.

Besonders vorteilhaft ist es somit, wenn das Sägeblatt nur ungeschränkte Zähne aufweist und die wirksamen Schneiden bzw. Schneidenabschnitte sämtlicher Zähne jeweils von einer abknickenden Schnittkante gebildet sind, - im Gegensatz zu einer durchgehenden wirksamen Schnittkante mit gerader Linie -, so daß jeder von dem wirksamen Teil einer Schnittkante insbesondere der ersten Gruppe von Zähnen ausgeräumte verdickte Span beim Ausräumen einer in zwei unterschiedlichen Richtungen auf ihn einwirkenden Verformung unterliegt, die somit einen spanbrechenden Effekt bewirkt. Dieser spanbrechende Effekt ist auch bei den Zähnen der zweiten Gruppe wirksam, wenngleich er dort vergleichsweise weniger entscheidend ist, weil die zweite Gruppe von Zähnen ohnehin darauf abgestimmt ist, dünne Späne auszuräumen. Die Verwirklichung von Phasen an allen Zähnen beider Gruppen in symmetrischer Anordnung zur Längsmittelebene dient in besonderer Weise der Stabilisierung des Geradeauslaufs des Sägeblatts. Es wird hier eine stabilisierende Keilwirkung durch gleichmäßige Abstützung der Zähne beider Gruppen im Schnittkanal erreicht, dergestalt, daß es keinen Zahn gibt, auf den eine resultierende Seitenkraft ausgeübt wird. Durch die symmetrische Ausbildung der Phasen heben sich die beiden Seitenkräfte an jedem Zahn gegeneinander auf. Das Sägeblatt hat somit keine Neigung, seitlich zu verlaufen.

Der breiteste Zahn im Zyklus, aus dessen wiederholter Anordnung die zweite Gruppe von Zähnen gebildet ist, weist zwischen Phase und Flanke einen Winkel > 90° auf. Dieser eingeschlossene Winkel sollte besser noch größer als 100° ausgebildet sein, um einer Verschleißanfälligkeit entgegenzuwirken. Es ist letztlich diese äußere Kante, die die Seitenwand des Schnittkanals bearbeitet und damit die verbesserte Oberflächengüte bestimmt. Da hier der Winkel zwischen Flanke und Phase insbesondere nennenswert größer als 90° ausgebildet ist, wirkt sich ein auch hier auftretender, unvermeidlicher Verschleiß an den Zähnen der zweiten Zahngruppe weniger nachteilig aus als bei spitzwinkliger Gestaltung. Auch die vermehrte Anordnung der Zähne in der zweiten Gruppe wirkt vorteilhaft in dieser Richtung. Es ergeben sich längere Standzeiten und eine Oberflächengüte im Schnittkanal, die überrascht. Außerdem bewirkt die stumpfwinklige Geometrie der Ecken der Zähne der zweiten Gruppe eine höhere Stabilität gegen das Ausbrechen der Ecken, was vor allem bei der Verwendung von Hartschneidstoffen von besonderer Wichtigkeit ist.

Es sei darauf hingewiesen, daß sich die Erfindung zunächst bei Anwendung einer konstanten Teilung im Zyklus verwirklichen läßt. Bereits dabei erbringt die Höhenabstufung und die Breitenabstufung der Zähne in der ersten Gruppe trotz der Ähnlichkeit in der Formgebung der Zähne eine verminderte Empfindlichkeit gegen Schwingungen und einen hervorragenden Geradeauslauf des stabilisierten Bandes. Von besonderer Bedeutung ist es jedoch, was die Erfindung ohne weiteres zuläßt, die beiden Gruppen von Zähnen auch in Kombination mit einer variablen Teilung einzusetzen. Durch die Anwendung einer variablen Teilung werden aus den Zähnen der ersten und der zweiten Gruppe mit ihrer Ineinanderschachtelung eine Art dritter Gruppen gebildet, die dann im Zyklus vermehrt auftauchen. Bei dem oben beschriebenen Beispiel aus drei Zähnen 1, 2, 3 der ersten Gruppe und drei Zähnen 4 der zweiten Gruppe und unter Anwendung von fünf unterschiedlichen Teilungen ergeben sich 30 Zähne im Zyklus. Die Ineinanderschachtelung der Zähne 1, 4, 2, 4, 3, 4 kehrt fünfmal wieder, entsprechend den fünf unterschiedlichen Teilungen.

In einer bevorzugten Ausführungsform kann zwischen je zwei Zähnen der ersten Gruppe ein Zahn der zweiten Gruppe eingeschoben sein. Es ist auch möglich, jeweils zwei Zähne der zweiten Gruppe hintereinander einzuschieben. Durch diese Maßnahme wird die "wirksame Teilung" zwischen den Zähnen der ersten Gruppe noch größer, also bei konstantem Vorschub die Späne noch dicker, während umgekehrt die Zähne der zweiten Gruppe noch feinere Späne an den Stirnflächen im Schnittkanal abnehmen.

Die Phasen an sämtlichen Zähnen beider Gruppen können in einem gleichen Phasenwinkel zu einer Geraden, senkrecht zu der Längsmittelebene des Grundkörpers angeordnet sein. Damit verlaufen die Phasen an den Zähnen beider Gruppen parallel zueinander, und zwar jeweils auf der linken und auf der rechten Seite des Zahns, bedingt durch die symmetrische Ausbildung zur Längsmittelebene durch den Grundkörper. Bei gleichmäßiger Höhenstufung der Zähne der ersten Gruppe ergibt sich in der Projektion ein gleichmäßiger Abstand von Phase zu Phase der Zähne der ersten Gruppe, wenn der Punkt, in welchem die Schnittkante abknickt, entsprechend gewählt wird. Betrachtet man die wirksamen Flächenanteile, dann kann die Auslegung der Zähne der ersten Gruppe so getroffen werden, daß gleiche Flächenanteile auf die Zähne der ersten Gruppe verteilt werden. Es ist aber auch möglich, selbst bei Einhaltung gleicher Phasenwinkel in der Projektion unterschiedliche Abstände zwischen Phasen an den Zähnen der ersten Gruppe zu verwirklichen. Andererseits müssen die Phasenwinkel nicht unbedingt übereinstimmen. Auch die Anzahl der Knickpunkte in einem wirksamen, abknickenden Schnittkantenabschnitt kann größer als 1 sein. Die Gruppe der zweiten Zähne ist gleich gestaltet. Jeder Zahn der zweiten Gruppe weist gleiche Höhe, gleiche Breite und gleiche Ausbildung der Schnittkante auf. Die ausschließlich die resultierenden Schnittoberflächen bearbeitende zweite Gruppe der breitesten Zähne kann zwischen Phase und Flanke auch abgerundet sein, um diese Zähne besonders unempfindlich gegen Verschleiß auszubilden und damit die Rauhigkeit der erzeugten Oberfläche im Schnittkanal nochmals zu verringern.

Zumindest die Zähne der zweiten Gruppe sollten eine größere Breite als der Grundkörper aufweisen, was jedoch nicht ausschließt, daß bereits die Zähne der ersten Gruppe breiter als der Grundkörper ausgebildet sind. Damit wird ein Freischnitt erreicht.

Die Flanken der Zähne der zweiten Gruppe können in einem Flankenwinkel im Bereich zwischen 3° und 12°, insbesondere 8°, angeordnet sein. Ein kleiner Flankenwinkel in Verbindung mit einem großen Phasenwinkel ergibt eine sehr stabile Ausbildung der freien Ecken der Zähne der zweiten Gruppe. Für die Ecken der Zähne der ersten Gruppe ist dies von untergeordneter Bedeutung, da diese Ecken ohnehin keine Schnittarbeit aufgrund vergleichsweise geringerer Breite erbringen. Es ist aber auch möglich, die Flanken sämtlicher Zähne beider Gruppen in einem übereinstimmenden Flankenwinkel mit sich deckender Projektion vorzusehen. Dies vereinfacht die Herstellung erheblich, indem die Flanken der Zähne beider Gruppen mit einer konstanten Maschineneinstellung, z. B. durch Schleifen, bearbeitet werden können.

Die Zähne beider Gruppen können als hartmetallbestückte, geschliffene Zähne ausgebildet sein. In Verbindung mit dem Phasenwinkel tritt dann auch eine Breitenstufung ein. Die Zähne beider Gruppen sind damit insgesamt großflächig ausgebildet und damit voll belastbar. In der Regel werden die Zähne der beiden Gruppen bzw. wesentliche Teile davon durch Hartmetallbestückung und durch Schleifen erstellt. Es versteht sich, daß der Bandstreifen des Grundkörpers zuvor durch einen Fräs-, Stanz- oder Schleifvorgang entsprechend vorbereitet wird. Es ist aber auch möglich, einen einseitig konisch erweiternd gewalzten Profilstab oder Bimetallstreifen als Material einzusetzen und die Zähne beider Gruppen durch einen Stanz-, Fräs- und/oder Schleifvorgang zu bilden.

Im sich wiederholenden Zyklus der Zähne aus den beiden Gruppen können Gruppen gebildet sein, die sich wiederholende variable Teilungen aufweisen. Dabei muß die Anzahl der Zähne in der Teilungsgruppe nicht unbedingt mit der Anzahl der Zähne der beiden Gruppen übereinstimmen. Bei einer Teilungsgruppe mit fünf unterschiedlichen Teilungen, einer ersten Zahngruppe aus drei Zähnen und einer zweiten Zahngruppe aus drei Zähnen beträgt die Anzahl der Zähne im Zyklus 30. Die Anzahl der Zähne im Zyklus ergibt sich als kleinstes gemeinsames Vielfaches der Teilungen mit der Anzahl der Zähne der beiden ineinandergeschachtelten Gruppen. Durch diese hohe Zahl der Zähne im Zyklus ist das Sägeblatt auch vergleichsweise unempfindlich gegenüber Schwingungsanregungen. Es besitzt eine große Laufruhe mit stabilisiertem Geradeauslauf, und die Standzeiten sind gegenüber herkömmlichen Sägeblättern überraschend verbessert.Die Anzahl der Zähne in der weiteren, durch die Folge der variablen Teilungen festgelegten Gruppe kann mit der Anzahl der Zähne aus den ersten beiden Gruppen nicht übereinstimmen; dann wird die Anzahl der Zähne im Zyklus besonders groß und das Sägeband bekommt eine große Laufruhe. Es ist aber auch möglich, daß die Anzahl der Zähne in der weiteren Gruppe - entsprechend der Anhahl der variablen Teilungen in der Folge - mit der Anzahl der Zähne im Zyklus übereinstimmt.

Die Erfindung wird anhand einiger Ausführungsbeispiele weiter erläutert und beschrieben. Es zeigen:
- Figur 1: eine Seitenansicht auf einen Ausschnitt aus einem Sägeblatt in vergrößerter Darstellung,
- Figur 2: eine Draufsicht auf das Sägeblatt gemäß Figur 1,
- Figur 3: eine Ansicht in Richtung der Linie III-III in Figur 1 an einem Bandsägeblatt mit drei Zähnen in der ersten Gruppe und drei Zähnen in der zweiten Gruppe,
- Figur 4: eine ähnlich Darstellung wie Figur 3, jedoch an einem anderen Ausführungsbeispiel eines Sägeblatts,
- Figur 5: eine ähnliche Darstellung wie Figur 3, jedoch an einem weiteren Ausführungsbeispiel,
- Figur 6: eine ähnliche Darstellung wie Figur 3, jedoch an einem weiteren Ausführungsbeispiel,
- Figur 7: eine Teilansicht auf das Bandsägeblatt gemäß den Figuren 1 und 3 oder 4 mit konstanter Teilung,
- Figur 8: eine Seitenansicht auf ein Sägeblatt mit variabler Teilung und
- Figur 9: eine Seitenansicht auf ein Sägeblatt mit konstanter Teilung ähnlich Figur 7, jedoch mit Doppelanordnung der Zähne in der zweiten Gruppe.

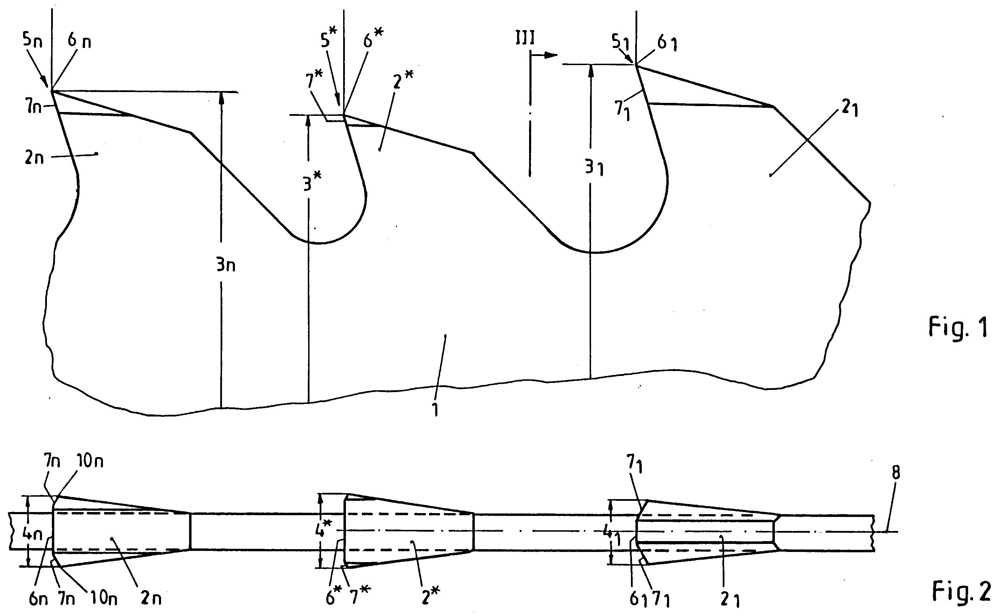

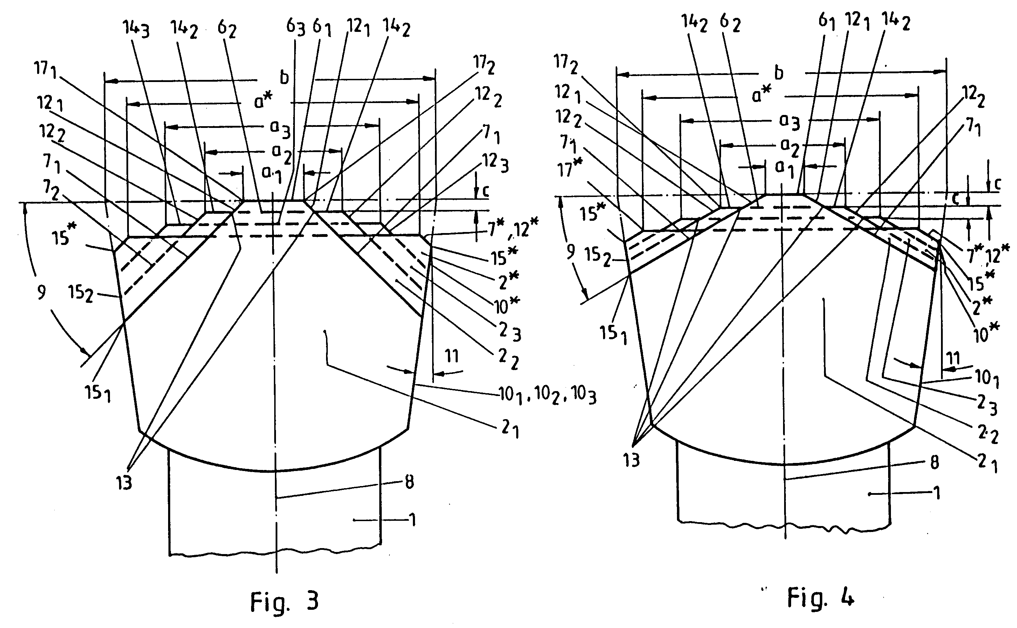

Das in Figur 1 in einem Ausschnitt verdeutlichte Bandsägeblatt weist einen Grundkörper 1 mit ungeschränkten Zähnen 2, 2* auf, die in sich wiederholenden Zyklen vorgesehen sind. Eine erste Gruppe von Zähnen 2 besteht aus hinsichtlich ihrer Höhe und Breite unterschiedlich gestalteten Zähnen. Der erste Zahn 2₁ einer solchen Gruppe ist mit dem Index 1 gekennzeichnet, während der letzte Zahn einer solchen Gruppe mit dem Index n gekennzeichnet ist. Es ist eine zweite Gruppe von Zähnen 2* vorgesehen, die sich in der Höhe und Breite nicht voneinander unterscheiden. Der Zahn 2* ist niedriger als der niedrigste Zahn 2ₙ der ersten Gruppe. Der Zahn 2* ist breiter als der breiteste Zahn 2ₙ der ersten Gruppe. Zur Vereinfachung sei zunächst einmal angenommen, daß die Anzahl der Zähne pro Zyklus sich aus der Summe der Anzahl der Zähne der ersten Gruppe und der Summe der Zähne der zweiten Gruppe ergibt, wie dies bei konstanter Teilung der Fall ist. Die Anzahl der Zähne in der ersten Gruppe beträgt hier zwei, besser drei und mehr. Die Anzahl der Zähne in der zweiten Gruppe beträgt mindestens zwei, ist jedoch vorzugsweise genauso groß wie die Anzahl der Zähne in der ersten Gruppe. Jeder Zahn 2, 2* weist eine Höhe 3, 3* auf, wobei auch hier wiederum die beschriebene Indexierung vorgenommen worden ist. Die Zähne 2 in der ersten Gruppe besitzen eine Höhenstufung in der Weise, daß die Höhe 3 von Zahn zu Zahn abnimmt. Die Höhe 3₁ des ersten Zahnes 2₁ der ersten Gruppe ist somit größer als die Höhe des zweiten Zahnes 2₂ der ersten Gruppe, die Höhe des zweiten Zahnes 2₂ ist wiederum größer als die Höhe des dritten Zahnes 2₃ usw.. Der letzte Zahn 2ₙ der ersten Gruppe besitzt somit die geringste Höhe 3ₙ, die freilich immer noch höher als die Höhe 3* der Zähne der zweiten Gruppe ist. Die Zähne 2 der ersten Gruppe weisen auch unterschiedliche Breiten 4 auf, wobei auch hier eine Breitenstufung in der Weise vorgesehen ist, daß der erste Zahn 2₁ der ersten Gruppe die geringste Breite, der letzte Zahn 2ₙ der ersten Gruppe die größte Breite der Zähne 2 innerhalb der ersten Gruppe aufweist. Der Zahn 2* der zweiten Gruppe ist freilich noch breiter als der letzte Zahn 2ₙ der ersten Gruppe. Jeder Zahn 2, 2* der beiden Gruppen besitzt eine abknickende Schnittkante 5, 5*, die von einem inneren Abschnitt 6, 6* und je einer nach außen anschließenden Phase 7, 7* gebildet wird. Die Abschnitte 6, 6* verlaufen senkrecht quer zu einer Längsmittelebene 8 durch den Grundkörper 1. Die Ausbildung jedes Zahnes 2, 2* ist symmetrisch zu der Längsmittelebene 8, so daß die Phasen 7, 7* rechts und links an jedem Zahn 2, 2* symmetrisch vorgesehen sind. Die Phasen 7, 7* sind, wie insbesondere die Ansichten der Figuren 3 bis 6 zeigen, zu dem Grundkörper 1 hin geneigt angeordnet. Es ergibt sich für sämtliche Zähne 2, 2* ein Phasenwinkel 9, der in einem Bereich zwischen 20° und 60° - vorzugsweise etwa 45° - vorgesehen sein sollte. Der Phasenwinkel 9 ist der Winkel zwischen einer Richtung senkrecht zu der Längsmittelebene 8 und der Phase 7, 7*. Die Phasen 7, 7* sind an den Zähnen 2, 2* der beiden Gruppen in der Weise angebracht, daß die Phase des ersten und höchsten Zahnes 2₁ nur einen vergleichsweise kleinen Abschnitt 6₁ aufweist, der eine geringere Länge besitzt als die Dicke des Grundkörpers 1, während der Zahn 2* der zweiten Zahngruppe einen geraden Abschnitt 6* einer größeren Abmessung aufweist, als es der Breite des Grundkörpers 1 entspricht.

Die unterschiedliche Formgestaltung ist am einfachsten aus Figur 3 ersichtlich, in der ein Ausführungsbeispiel mit drei Zähnen 2 in der ersten Gruppe und drei Zähnen 2* in der zweiten Gruppe dargestellt ist. Die sechs Zähne im Zyklus ergeben sich durch folgende Ineianderschachtelung der Zähne 2 der ersten Gruppe und der Zähne 2* der zweiten Gruppe: 2₁, 2*, 2₂, 2*, 2₃, 2*. Man erkennt zunächst den höchsten Zahn 2₁ der ersten Gruppe in Draufsicht mit seinem geraden relativ klein gestalteten Abschnitt 6₁, der hier die Länge a₁ aufweist. An diesen geraden Abschnitt 6₁ schließen sich am ersten Zahn 2₁ die relativ lang ausgebildeten Phasen 7₁ an, die in einem Phasenwinkel 9, hier 45°, vorgesehen sind. Die Phase 7₁ erstreckt sich bis zur Flanke 10₁ des Zahnes 2₁. Die Flanke 10 erweitert sich vom Grundkörper 1 in Richtung auf die Spitze jedes Zahnes 2, 2*. Die Flanke 10 ist hier in einem Flankenwinkel 11 angeordnet, der an diesem Beispiel 8° beträgt. Der Flankenwinkel 11 ist nicht indexiert, da die Flanken 10 sämtlicher Zähne 2, 2* beider Gruppen in der Projektion zusammenfallen, also sämtliche Flanken 10 im gleichen Flankenwinkel 11 vorgesehen sind. Die Ausbildung der Flanken 10 erfolgt durch einen Schleifvorgang über sämtliche Zähne 2, 2* der beiden Gruppen hinweg. Der erste Zahn 2₁ der ersten Gruppe schneidet jedoch nur mit einem Teil seiner Schnittkante 5₁, und zwar mit dem Teil, der über den Umriß des zweiten Zahns 2₂ der ersten Gruppe, der erst hinter dem ersten Zahn 2* der zweiten Gruppe angeordnet ist, in der Projektion vorsteht. Der wirksame, also schneidende Teil der Schnittkante 5₁ des ersten Zahnes 2₁ der ersten Gruppe besteht aus dem geraden Abschnitt 6₁ und dem sich anschließenden Abschnitt 12₁ nach beiden Seiten. Die Abschnitte 12₁ enden in dem Projektionsschnittpunkt 13.

Auf den höchsten Zahn 2₁ der ersten Gruppe folgt ein erster Zahn 2* der zweiten Gruppe. Dieser Zahn 2* besitzt eine geringere Höhe als die Zähne 2₁, 2₂ und 2₃ der ersten Gruppe, jedoch eine größere Breite als diese.

Als dritter Zahn im Zyklus schließt sich der zweithöchste Zahn 2₂ der ersten Gruppe an. Er weist einen geraden Abschnitt 6₂ der Länge a₂ auf, an den sich wiederum Phasen 7₂ nach beiden Seiten in symmetrischer Weise anschließen. Der Verlauf sämtlicher Phasen 7 an allen Zähnen 2 der ersten Gruppe und an allen Zähnen 2* der zweiten Gruppe ist parallel zueinander. Auch von dem Zahn 2₂ schneidet nur ein gewisser Teil, nämlich der Teil der Schnittkante 5₂, der die Umrisse der anderen Zähne überragt. Dies sind die beiden senkrecht zur Längsmittelebene verlaufenden Schneidenabschnitte 14₂ des Abschnittes 6₂ und die beiden jeweils anschließenden Abschnitte 12₂ der Phasen 7₂. Entsprechendes gilt für den dritten Zahn 2₃ der ersten Gruppe und die jeweils dazwischengeschalteten Zähne 2* der zweiten Gruppe. Bei den Zähnen 2* sind die Phasen 7* identisch mit den Abschnitten 12*. Verlängert man die Flanken 10 in Richtung auf eine Linie, die die Verlängerung des Abschnittes 6₁ darstellt, dann ergibt sich hier eine theoretische Breite b der Zähne 2, 2*.

Man erkennt aus Figur 3, daß nur die beiden äußeren Ecken 15* der Zähne 2* der zweiten Gruppe schneiden, während die Ecken 15₁, 15₂ usw. der Zähne 2 der ersten Gruppe sich innerhalb des Schnittkanals bewegen und an einem Materialabtrag nicht beteiligt sind. Für die Standzeit und den unvermeidlichen Verschleiß an den Ecken 15* ist es wesentlich, zu erkennen, daß der Winkel zwischen Phase 7* und der Flanke 10* nicht spitzwinklig, sondern stumpfwinklig ausgebildet ist, also größer, vorzugsweise nennenswert größer als 90°.

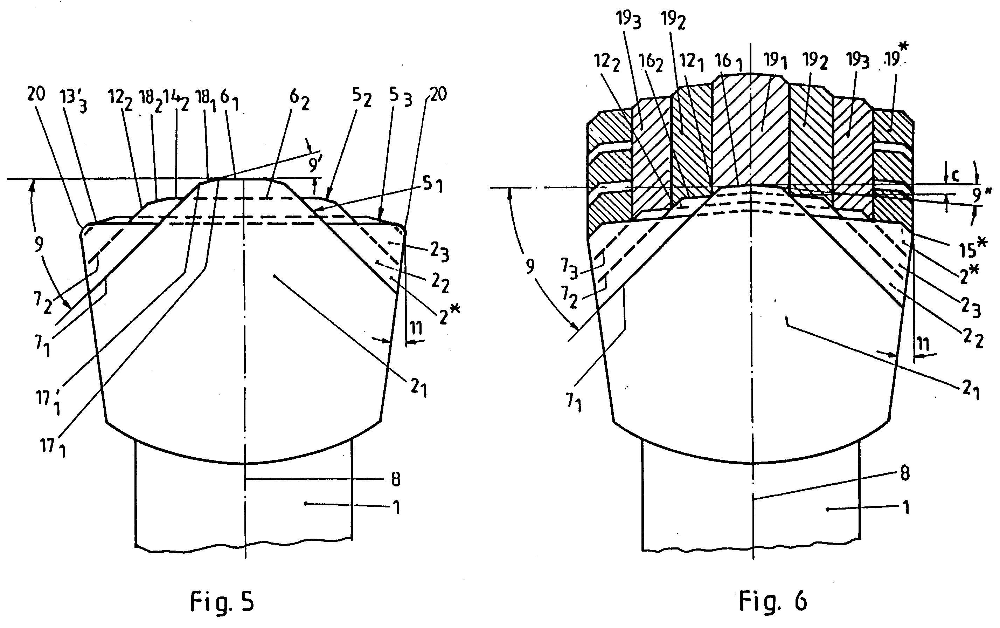

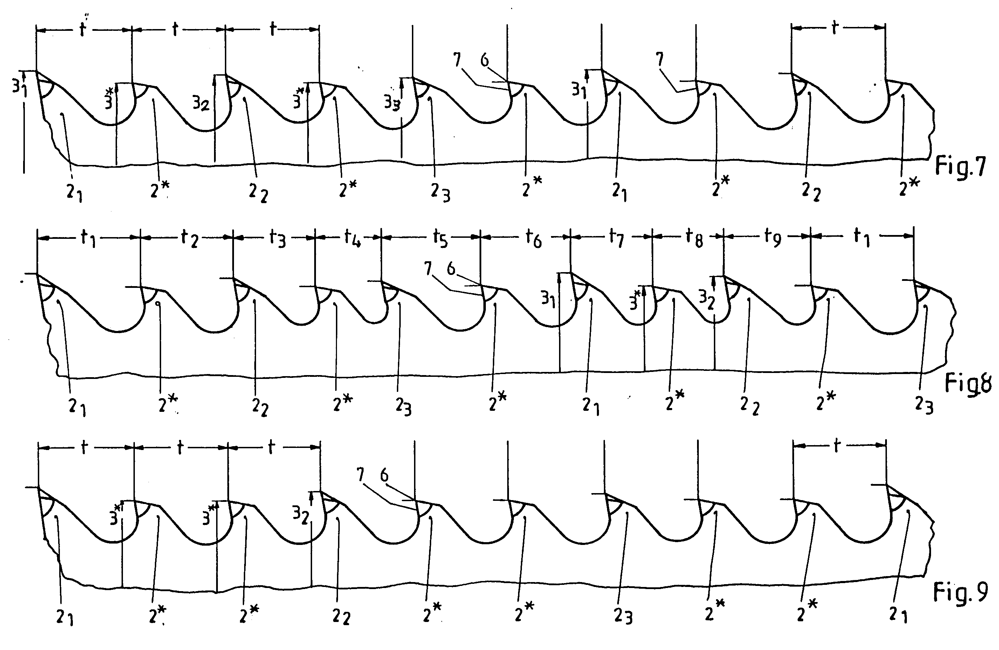

Man erkennt an Figur 3 auch eine gleichmäßige Höhenstufung, die sogar über die Zähne 2 der ersten Gruppe und die Zähne 2* der zweiten Gruppe hinweggeht. Die Höhen- und Breitenstufung in Verbindung mit dem Phasenwinkel 9 ist nun so gewählt, daß von jedem Zahn 2, 2* der beiden Gruppen streifenförmige Partien (Figur 6) aus dem Werkstück ausgeräumt werden, wobei die Breite der Streifen pro Zahn 2, 2* in etwa übereinstimmt, jedoch die Dicke der Streifen sehr unterschiedlich bemessen ist. Die Höhe der Streifen stimmt an den Zähnen 2₁, 2₂ und 2₃ überein; es wird - wie ersichtlich - ein relativ dicker Span jeweils ausgeräumt. Die Höhen der streifenförmigen Partien der Zähne 2* sind dagegen sehr viel flacher. Man erkennt, daß im gleichen Zeitintervall, in welchem je ein Streifen der Zähne 2 der ersten Gruppe 1 ausgeräumt wird, drei kleinere Streifen durch die Zähne 2* ausgeräumt werden. Jeder einzelne Span, der mit einem Zahn 2, 2* einer der beiden Zahngruppe ausgeräumt wird, wird im Bereich des Abknickpunktes 17 der Schnittkante zwischen dem geraden Abschnitt 6 und dem wirksamen Teil der Phase 7 gleichsam nach zwei Richtungen gebogen, die unterschiedlich sind. Dies trägt dazu bei, den einzelnen Span gleichsam noch einmal aufzuspalten bzw. während der Abnahme in Teile zu zerlegen.

Das Ausführungsbeispiel der Figur 4 ist an sich ähnlich gestaltet wie das der Figur 3. Der Phasenwinkel 9 beträgt hier jedoch 30°, und es sind auch hier drei Zähne 2 in der ersten Gruppe vorgesehen, zwischen denen jeweils ein Zahn 2* der zweiten Gruppe angeordnet ist. Es sei weiterhin angenommen, daß eine konstante Teilung Anwendung findet, so daß auch die Zähnezahl im Zyklus 6 beträgt. Die Höhenstufung und die Breitenstufung ist gleichmäßig über die Zähne beider Gruppen durchgeführt.

Figur 5 zeigt eine weitere Ausführungsform, bei der in der ersten Gruppe drei Zähne 2₁, 2₂ und 2₃ vorgesehen sind, zwischen denen jeweils ein Zahn 2* eingeschoben ist, so daß auch hier sechs Zähne pro Zyklus vorgesehen sind. Der Phasenwinkel 9 beträgt 45°, und der Flankenwinkel 11 ist mit 8° gewählt. Die Schnittkanten 5 der Zähne 2 der ersten Gruppe sind hier jedoch nicht aus zwei gerade verlaufenden Abschnitten, sondern aus drei gerade verlaufenden Abschnitten, also mit zwei Abknickpunkten 17₁ und 17_{1'} zusammengesetzt. Für den ersten und damit höchsten Zahn 2₁ ergibt sich ein gerader Abschnitt 6₁, an den sich in einem Phasenwinkel 9' ein erster Phasenabschnitt 18₁ und dann die Phase 7₁ anschließen. Die Phase 7₁ ist im Phasenwinkel 9° vorgesehen. Der zweite Zahn, der der erste Zahn 2* der zweiten Gruppe ist, besitzt eine durchgehende ungeknickte Schneide und eine abgerundete Ecke 20, die die Oberfläche im Schnittkanal bearbeitet. Der auf den zweiten Zahn 2* der zweiten Gruppe folgende zweite Zahn 2₂ der ersten Gruppe besitzt einen geraden Schneidenabschnitt 14₂, einen ersten Phasenabschnitt 18₂ und eine zweite Phase 7₂. Man erkennt, daß der gesamte Phasenabschnitt 18₂ im Bereich des wirksamen Teils der Schnittkante des Zahnes 2₂ liegt, während von der Phase 7₂ wiederum nur der Abschnitt 12₂ der Phase 7₂ schneidend wirksam ist. Es folgt dann wiederum ein Zahn 2* und sodann der dritte Zahn 2₃ der ersten Gruppe. Man erkennt somit, daß die Schnittkanten 5 an jedem Zahn durch Erhöhung der Anzahl der Abknickpunkte 17 in ihrer Form verändert werden kann, so daß bei unendlich vielen Abknickpunkten letztendlich keine abknickende Schnittkante, sondern eine abgerundete Schnittkante an jedem Zahn 2 entsteht. Aber auch bei dieser Auführungsform, bei der sich eine gleichmäßige Höhen- und Breitenstufung nur über die Zähne 2 der ersten Gruppe erstreckt, werden von diesen Zähnen 2 dicke Späne ausgeräumt, während die Zähne 2* dünne Späne ausräumen.

Figur 6 zeigt ein weiteres Ausführungsbeispiel, welches im wesentlichen mit den vorher beschriebenen Ausführungsbeispielen übereinstimmen kann. Die Anzahl der Zähne 2 in der ersten Gruppe beträgt hier wieder 3. Die Anzahl der Zähne 2* in der zweiten Gruppe beträgt ebenfalls 3, so daß sich bei konstanter Teilung sechs Zähne im Zyklus befinden. Es gibt bei den Zähnen 2 der ersten Gruppe und den Zähnen 2* der zweiten Gruppe jedoch keine gerade, d. h. senkrecht zu der Längsmittelebene 8 verlaufende Abschnitte 6, sondern stattdessen sind um einen Winkel 9'' leicht pfeilförmig schräggestellte Abschnitte 16 vorgesehen. Die von jedem Zahn 2 bzw. 2* im Schnittkanal ausgeräumten Streifen 19₁, 19₂, 19₃ bzw. 19* sind schraffiert und flächenmäßig umgrenzt angedeutet.

Figur 7 verdeutlicht nocheinmal das Ausführungsbeispiel der Figur 1 und 3 in Seitenansicht über einen vollen Zyklus mit drei Zähnen 2₁, 2₂ und 2₃ der ersten Gruppe und drei Zähnen 2* der zweiten Gruppe, so daß sich bei konstanter Teilung im Zyklus die Zahnfolge 2₁, 2*, 2₂, 2*, 2₃, 2* ergibt.

Figur 8 verdeutlicht die Überlagerung der Höhen- und Breitenstufung der Zähne 2, 2* gemäß Figur 7 mit einer variablen Teilung. Zur vereinfachten Verdeutlichung sei auch hier wieder angenommen, daß es hinsichtlich der Höhenstufung eine erste Gruppe von drei Zähnen 2 und eine zweite Gruppe von drei Zähnen 2* gibt, die sich in der angegebenen Reihenfolge wiederholen und so vorgesehen sind. Die Anzahl der Zähne aus diesen beiden Gruppen beträgt also 6. Gleichzeitig ist eine variable Teilung mit neun Teilungen t₁ bis t₉ dargestellt, so daß in einer nach der Teilung t bestimmten Zahngruppe die Anzahl der Zähne in einer solchen Teilungsgruppe 9 beträgt. Die Form der Zähne 2, 2* hinsichtlich der Anbringung der Schnittkanten 5, der Abschnitte 6 und der Phasen 7 ist hier genauso, wie es an dem vorangehenden Ausführungsbeispiel beschrieben wurde. Damit entsteht jedoch ein Zyklus von sich wiederholenden Zähnen, der den kleinsten gemeinsamen Vielfachen, also 6 x 9 = 54, entspricht. Der Zyklus weist 54 Zähne auf. Erst der 55. Zahn entspricht dem ersten Zahn im Zyklus hinsichtlich seiner Ausbildung, seiner Höhe und seiner zugeordneten Teilung.

Figur 9 zeigt in Seitenansicht ein weiteres Ausführungsbeispiel, wobei zur Vereinfachung wiederum eine konstante Teilung zugrundegelegt ist. Es ist eine erste Gruppe von drei Zähnen 2₁, 2₂, 2₃ vorgesehen. Dieser ist eine zweite Gruppe von drei Zähnen 2* zugeordnet. Diese zweite Gruppe ist doppelt vorgesehen und ausgebildet. Man kann auch sagen, daß jeder Zahn 2* verdoppelt angeordnet ist. Hierdurch wird der Abstand zwischen dem ersten Zahn 2₁ der ersten Gruppe und dem zweiten Zahn 2₂ der ersten Gruppe noch größer, so daß der diesbezüglich ausgeräumte Span noch dicker wird. Die Zähne 2* räumen vergleichsweise dünne Späne aus, wobei sich die Dicke der Späne in den beiden zweiten Gruppen voneinander unterscheidet.

### BEZUGSZEICHENLISTE

- 1: - Grundkörper
- 2: - Zähne
- 3: - Höhe
- 4: - Breite
- 5: - Schnittkante
- 6: - Abschnitt
- 7: - Phase
- 8: - Längsmittelebene
- 9: - Phasenwinkel
- 10: - Flanke
- 11: - Flankenwinkel
- 12: - Abschnitt
- 13: - Projektionsschnittpunkt
- 14: - Schneidenabschnitt
- 15: - Ecke
- 16: - Abschnitt
- 17: - Abknickpunkt
- 18: - Phasenabschnitt
- 19: - Streifen
- 20: - abgerundete Ecke

## Patentansprüche

1. Sägeblatt mit einem Grundkörper (1) und ungeschränkten Zähnen mit Schneiden, die in sich wiederholenden Zyklen vorgesehen sind und jeder Zyklus mindestens eine aus mindestens zwei Zähnen (2) bestehende Zahngruppe mit von Zahn zu Zahn abnehmender Höhe und dabei zunehmender Breite aufweist, wobei diese Zähne (2) symmetrisch zu einer Längsmittelebene (8) durch den Grundkörper ausgebildet sind, **dadurch gekennzeichnet**, daß im Zyklus mindestens zwei Gruppen von Zähnen (2, 2*) vorzugsweise regelmäßig ineinandergeschachtelt angeordnet sind, und daß die Zähne (2*) der zweiten mindestens aus zwei Zähnen (2*) bestehenden Gruppe identisch ausgebildet sind und die Zähne mit der größten Breite und geringsten Höhe darstellen.

2. Sägeblatt nach Anspruch 1, **dadurch gekennzeichnet**, daß das Sägeblatt nur ungeschränkte Zähne (2, 2*) aufweist und die wirksamen Schneiden bzw. Schneidenabschnitte (6₁, 12₁; 6*, 12*, 14₂, 12₂; 6*, 12*, 14₃, 12₃; 6*, 12*) sämtlicher Zähne (2, 2*) jeweils von einer abknickenden Schnittkante (5₁, 5*, 5₂, 5*, usw.) gebildet sind.

3. Sägeblatt nach Anspruch 1 oder 2, **dadurch gekennzeichnet**, daß der breiteste Zahn (2*), aus dessen wiederholter Anordnung die zweite Gruppe von Zähnen gebildet ist, zwischen Phase (7*) und Flanke (10*) einen Winkel größer 90° aufweist.

4. Sägeblatt nach einem oder mehreren der Ansprüche 1 bis 3, **dadurch gekennzeichnet**, daß zwischen je zwei Zähnen (2₁, 2₂, usw) der ersten Gruppe mindestens ein Zahn (2*) der zweiten Gruppe eingeschoben ist.

5. Sägeblatt nach einem oder mehreren der Ansprüche 1 bis 4, **dadurch gekennzeichnet**, daß die Phasen (7, 7*) an sämtlichen Zähnen (2, 2*) beider Gruppen in einem gleichen Phasenwinkel (9) zu einer Geraden, senkrecht zu der Längsmittelebene (8) des Grundkörpers (1) angeordnet sind.

6. Sägeblatt nach Anspruch 3, **dadurch gekennzeichnet**, daß die ausschließlich den Schnittkanal bearbeitende Gruppe der breitesten Zähne (2*) zwischen Phase (7*) und Flanke (10*) abgerundet sind.

7. Sägeblatt nach einem oder mehreren der Ansprüche 1 bis 6, **dadurch gekennzeichnet**, daß zumindest die Zähne (2*) der zweiten Gruppe eine größere Breite als der Grundkörper (1) aufweisen.

8. Sägeblatt nach einem oder mehreren der Ansprüche 1 bis 7, **dadurch gekennzeichnet**, daß die Flanken (10*) der Zähne (2*) der zweiten Gruppe in einem Flankenwinkel (11*) im Bereich zwischen 3° und 12°, insbesondere 8°, angeordnet sind.

9. Sägeblatt nach einem der Ansprüche 1 bis 8, **dadurch gekennzeichnet**, daß die Zähne (2, 2*) beider Gruppen als hartmetallbestückte, geschliffene Zähne ausgebildet sind.

10. Sägeblatt nach einem der Ansprüche 1 bis 9, **dadurch gekennzeichnet**, daß im sich wiederholenden Zyklus der Zähne (2, 2*) aus den beiden Gruppen weitere Gruppen gebildet sind, die sich wiederholende, variable Teilungen (t₁, t₂, t₃, t₄ usw.) aufweisen.

11. Sägeblatt nach Anspruch 10, **dadurch gekennzeichnet**, daß die Anzahl der Zähne in der weiteren, durch die Folge der variablen Teilungen (t₁, t₂, t₃, usw.) festgelegten Gruppe mit der Anzahl der Zähne aus den ersten beiden Gruppen von Zähnen nicht übereinstimmt.

## Claims

1. A saw blade having a basic body (1) and unset teeth with cutting edges which are provided in recurring cycles, and each cycle having at least one group of teeth with at least two teeth (2) with a decreasing height and increasing width graduation, the teeth (2) being formed symmetrical with regard to a longitudinal centre plane (8) through the basic body, **wherein** at least two groups of teeth (2,2*) are, preferably regularly, intermixed in a cycle, with the teeth (2*) of the second group are formed identically and have the greatest width and the smallest height.

2. A saw blade as claimed in claim 1, **wherein** the saw blade has only unset teeth (2, 2*) and the effective cutting edges resp. cutting edge sections (6₁, 12₁; 6*, 12*, 14₂, 12₂; 6*, 12*, 14₃, 12₃; 6*, 12*) of all teeth (2, 2*) are formed by an inflected cutting edge (5₁, 5*, 5₂, 5*, etc.).

3. A saw blade as claimed in claim 1 or 2, **wherein** the widest tooth (2*), by whose recurrence the second group of teeth is formed, has an angle between phase (7*) and flank (10*) of more than 90°.

4. A saw blade as claimed in one or more claims 1 to 3, **wherein** there is at least one tooth (2*) of the second group included between two teeth (2₁, 2₂, etc.) of the first group.

5. A saw blade as claimed in one or more claims 1 to 4, **wherein** the phases (7, 7*) on all teeth (2, 2*) of both groups have a common phase angle (9) with respect to a straight line perpendicular to the longitudinal centre plane (8) of the basic body (1).

6. A saw blade as claimed in claim 3, **wherein** the second group of widest teeth (2*), which work on the cutting channel only, are rounded off between phase (7*) and flank (10*).

7. A saw blade as claimed in one or more claims 1 to 6, **wherein** at least the teeth (2*) of the second group are wider than the basic body (1).

8. A saw blade as claimed in one or more claims 1 to 7, **wherein** the flanks (10*) of the teeth (2*) of the second group are provided at a flank angle (11*) between 3° and 12°, particularly 8°.

9. A saw blade as claimed in one or more claims 1 to 8, **wherein** the teeth (2, 2*) of both groups are provided as hard metal, ground teeth.

10. A saw blade as claimed in one or more claims 1 to 9, **wherein** further groups are formed in the recurring cycle of teeth (2, 2*) from both groups, which have recurring, variable pitches (t₁, t₂, t₃, t₄, etc.).

11. A saw blade as claimed in claim 10, **wherein** the number of teeth in the further group, given by the order of variable pitches (t₁, t₂, t₃, etc.), is not equal to the number of teeth in the first two groups of teeth.

## Revendications

1. Lame de scie avec un corps de base (1) et des dents non avoyées avec des tranchants, qui sont prévues en des cycles se répétant et chaque cycle présente au moins un groupe de dents constitué d'au moins deux dents (2), avec une hauter décroissant et une largeur croissant d'une dent à l'autre, ces dents (2) étant formées symétriquement par rapport à un plan médian longitudinal (8) passant par le corps de base, caractérisée en ce que dans le cycle au moins deux groupes de dents (2, 2*) sont disposés de préférence régulièrement emboîtés l'un dans l'autre, et en ce que les dents (2*) du deuxième groupe, constituées d'au moins deux dents (2*), sont identiques et constituent les dents présentant la plus grande largeur et la plus petite hauter.

2. Lame de scie selon la revendication 1, caractérisée en ce que la lame de scie ne présente que des dents (2, 2*) non avoyées et les tranchants utiles ou les portions de tranchant (6₁, 12₁, ; 6*, 12*, 14₂, 12₂ ; 6*, 12*, 14₃, 12₃ ; 6*, 12*) de toutes les dents (2, 2*) sont formés chaque fois par une arête de coupe (5₁, 5*, 5₂, 5*, etc.) repliée.

3. Lame de scie selon la revendication 1 ou 2, caractérisée en ce que la dent (2*) la plus large dont la disposition répétée constitue le deuxième groupe de dents, présente un angle supérieur à 90° entre le chanfrein (7*) et le flanc (10*).

4. Lame de scie selon une ou plusieurs des revendications 1 à 3, caractérisée en ce qu'entre deux dents (2₁, 2₂, etc.) du premier groupe est introduite au moins une dent (2*) du deuxième groupe.

5. Lame de scie selon une ou plusieurs des revendications 1 à 4, caractérisée en ce que les chanfreins (7, 7*) de toutes les dents (2, 2*) des deux groupes sont disposés suivant un même angle de chanfrein (9) par rapport à une droite, perpendiculairement au plan médian longitudinal (8) du corps de base (1).

6. Lame de scie selon la revendication 3, caractérisée en ce que le groupe des dents (2*) les plus larges, traitant exclusivement le canal de coupe, sont arrondies entre le chanfrein (7*) et le flanc (10*).

7. Lame de scie selon une ou plusieurs des revendications 1 à 6, caractérisée en ce qu'au moins les dents (2*) du deuxième groupe présentent une plus grande largeur que le corps de base (1).

8. Lame de scie selon une ou plusieurs des revendications 1 à 7, caractérisée en ce que les flancs (10*) des dents (2*) du deuxième groupe sont disposés suivant un angle de flanc (11*) compris entre 3° et 12°, en particulier égal à 8°.

9. Lame de scie selon l'une des revendications 1 à 8, caractérisée en ce que les dents (2, 2*) des deux groupes sont des dents meulées, garnies de métal dur.

10. Lame de scie selon l'une des revendications 1 à 9, caractérisée en ce que dans le cycle se répétant des dents (2, 2*) sont formés, à partir des deux groupes, d'autres groupes, qui présentent des divisions (t₁, t₂, t₃, t₄, etc.) variables, se répétant.

11. Lame de scie selon la revendication 10, caractérisée en ce que le nombre de dents dans l'autre groupe, fixé par la succession des divisions variables (t₁, t₂, t₃, etc.) coïncide avec le nombre de dents des deux premiers groupes de dents.
